Europäisches Patentamt

(19) **European Patent Office**

Office européen des brevets

(11) Publication number: **0 273 757**
**B1**

(12) **EUROPEAN PATENT SPECIFICATION**

(45) Date of publication of the patent specification:
12.12.90

(51) Int. Cl.⁵: **H04N 1/40**

(21) Application number: **87311491.2**

(22) Date of filing: **29.12.87**

(54) **Image reading apparatus.**

(30) Priority: **27.12.86 JP 311207/86**

(43) Date of publication of application:
**06.07.88 Bulletin 88/27**

(45) Publication of the grant of the patent:
**12.12.90 Bulletin 90/50**

(84) Designated Contracting States:
**DE GB**

(56) References cited:
**EP-A- 0 004 852**
**EP-A- 0 158 288**
**EP-A- 0 158 962**
**EP-A- 0 180 391**
**DE-A- 3 540 528**

**IBM TECHNICAL DISCLOSURE BULLETIN, vol. 22,
no. 8A, January 1980, pages 3131-3132, New York, US;
L.W. BASSETTI et al.: "Illumination regulation for array
scanner"**

(73) Proprietor: **SHARP KABUSHIKI KAISHA,
22-22 Nagaike-cho Abeno-ku, Osaka 545(JP)**

(72) Inventor: **Nagano, Fumikazu, 46-13 Izumihara-cho,
Yamatokoriyama-shi Nara-ken(JP)**

(74) Representative: **Brown, Kenneth Richard et al, R.G.C.
Jenkins & Co. 26 Caxton Street, London SW1H 0RJ(GB)**

**Description**

The present invention relates to an image reading apparatus and more particularly, to an image reading apparatus such as a color copier and a color scanner used to read a transparent film.

Conventionally, the same amount of light is irradiated to all the films to be read regardless of the films. transmission factor. So, no consideration is made even when the range of light transmission factor of the films is very wide. This causes inadequacy of white balance adjustment. Especially, when a color positive film with bad light transmission factor is read, the tone of the image required by the reading is far different from that of the original film.

According to the invention there is provided apparatus for reading an image carried on a light transmissive film wherein light from a light source is directed onto the image carrier, the light transmitted through the image-carrier being detected in order to derive a representation of the image, characterised by means for controlling the intensity of the light source in accordance with the determined transmissivity of the image carrier.

In order that the present invention may be more fully understood a detailed description will be given of an embodiment thereof, by way of example, with reference to the accompanying drawings wherein:

FIG. 1 is block diagram showing the constitution of an image reading apparatus according to the present invention; and

FIG. 2 is a block diagram showing the electrical constitution of an image reading apparatus according to the present invention.

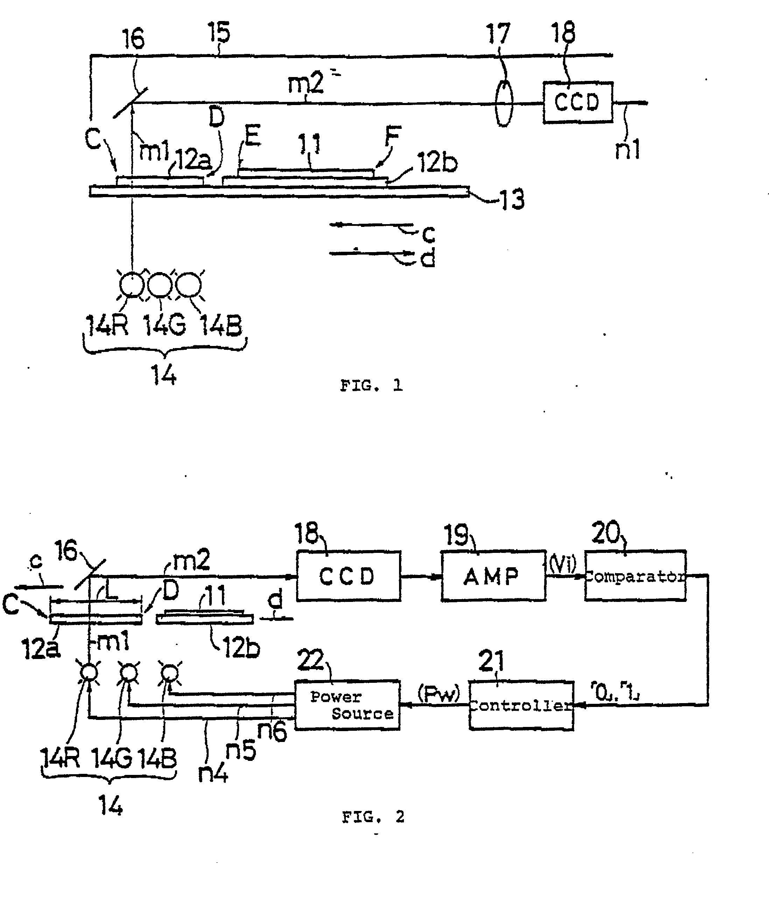

Referring to Figure 1, a film 11 to be read and imaged is set on the second adjusting board 12b mounted on a transparent board 13. To the left of the second adjusting board 12b in FIG. 1, the first adjusting board 12a is set. The first adjusting board 12a is made preferablly of milk-white resin. There are a plurality of exchangeable boards of various extents of density and the most appropriate one is chosen as the first adjusting board 12a in advance by an operator which has light transmission factor corresponding to that of the film 11. The first adjusting board 12a and the second adjusting board 12b (when 12a and 12b are generically referred, hereinafter shown as 12) are provided for the purpose of diffusing and homogenizing light from a light source 14. The board 13 moves horizontally in the direction of arrows c or d in FIG. 1.

Power sources 14R, 14G, and 14B which individually emit red, green and blue light respectively (when 14R, 14G, anf 14B are generically referred, shown as 14) are provided below the board 13. Light from the light source 14 irradiates the film 11 through the board 13. The light source 14 has a length corresponding to the width of the board 13 and is a linear light source, preferably a fluorescent lamp.

On the starting of the operation, a first red light source 14R is switched on and the red light passing through the board 13 is diffused and uniformly radiated within the first adjusting board 12a to pass through the left side C of the first adjusting board 12a. At the same time, the board 13 moves in the direction of arrow c (to the left) in FIG. 1 from the point C as a base point.

Then the red light from the red light source 14R scans the first adjusting board to its right side D, and after that, scans the film 11 from its left side E to its right side F. After the red light source 14 R reaches the right side F, it is switched off. At the same time, the board 13 moves in the direction of arrow d (to the right) in FIG. 1 back to the base point C. Next, the green light source 14 G is switched on and scans in the same way as the red light source, and at last the blue light source 14B is switched on and scans in the same way, to finalize the scan of the film 11 by all of the light sources 14R, 14G, and 14B.

In the scanning, the light from the light source 14 first passes through the first adjusting board 12a and as shown by line m1, reaches a reflection mirror 16. As shown by line m2, it is reflected and passes through the lens 17 to be introduced to an imaging means 18, preferably charge-coupled device (CCD). Then, successively and sequentially, the light passing through the film 11 on the second adjusting board 12b is introduced in the same way as shown by lines m1 and m2. In this way, first, information regarding the white balance from the first adjusting board 12a is introduced to line n1 after converted to corresponding electrical signals, and then, information regarding the color and tone of the film 11 on the second adjusting board 12b is introduced to the line n1 after converted to the corresponding electrical signal. According to the abovementioned electrical signals, controlling is made as described below, and then, the image is processed by an image processing apparatus(not shown in the figures).

In the above embodiment, the light from the light source 14 is reflected only once by the reflection mirror 16, but the reflection may not be restricted to be only once, and it may be possible to use several reflection mirrors to lead the light in a desired direction. Also, a lens 17 provided on the optical path may not be restricted to be only at one place.

Further, in this embodiment, light source is a linear light source, but surface light source and imaging means for surface-reading may be used to avoid moving the above board 13.

FIG. 2 is a block diagram showing an electrical constitution of an image reading apparatus as a preferred embodiment of the present invention. In FIG. 2, for convenience' sake, the board 13 and the lens 17 are omitted and light reflection is made only once by the reflection mirror 16.

The output of the imaging means 18 is amplified by an amplifier 19 and is inputted to a comparator 20 as a comparison means used to detect and compare the output of the imaging means 18 with a predetermined level. The comparator 20 compares the input level $V_i$ with the predetermined specified level $V_s$ (for example, $V_s = 1V$). When $V_i < V_s$, the comparator 20 outputs logic '0' and when $V_i > V_s$, it outputs logic '1'.

According to the output of the comparator 20, the controlling portion 21 as a controlling means which outputs power controlling signals sequentially inputs pulse controlling signals to the power source 22 which energizes the light source by power source controlling signals so that the light amount of the light source 14 is adjusted. The controlling signals are determined by the abovementioned output level of the comparator 20 '0' or '1'.

On starting, the controlling portion 21 gives the controlling signal Pw to the power source 22. Pw is formulated as follows:

$$Pw = T \cdot N \ldots(1)$$

T is a time function relative to the distance L between the two sides of the first adjusting board 12a (C - D) and to the time required to scan the distance L. N is expressed as a geometrical progression 1/2, 1/4, 1/8, 1/16 . . . when the rated largest light amount of the light source 14 is expressed as 1. At the beginning, N is set as 1/2 and Pw expressed as follows is introduced to the power source 22.

$$Pw = T \cdot (1/2) \ldots(2)$$

According to this, first, the red light source 14R is energized by the electric power corresponding to 1/2 light amount and is switched on.

The light emitted from the light source 14R passes through the first adjusting board 12a and reaches the reflection mirror 16 as shown by line m1, and then is reflected and introduced to the imaging means 18 as shown by line m2. As no film is set of the first adjusting board 12a, all light from the light source 14 R is introduced to the imaging means 18. So, the light amount which is introduced to the imaging means 18 corresponds to the 'white' portion of the film, which means the condition of white balance. If, in this condition, the output level of the comparator 20 is logic '0,' the output level is too low, so the controlling portion 21 increases the level of the controlling signal Pw to the power source 22 so that the following relation is satisfied.

$$Pw = T \cdot \{ (1/2) + (1/4) \} \ldots(3)$$

If the output level is still '0,' the light amount is still too small, so the controlling portion 21 further increases the level of the controlling signal Pw to the power source 22 so that the following relation is satisfied.

$$Pw = T \cdot \{ (1/2) + (1/4) + (1/8) \}\ldots(4)$$

If the output level then becomes '1,' for the purpose of fine adjustment of the light amount, 1/16 is subtracted from {} of the right side of the expression (4): $Pw = T \cdot \{ (1/2) + (1/4) + (1/8) - (1/16)\}= (13/16) \cdot T\ldots(5)$

Namely, the controlling signal Pw corresponding to 13/16 of the rated largest light amount is given to the power source 22. The extent of energizing the light source 14 is thus determined and white balance adjustment is completed.

To the contrary, if the first adjusting board have a good transmission factor and, for example, the output level of the comparator 20 is logic '1' at the level (1/2), a quantity between 1/2 and 1/16 is sequentially subtracted until the output level of the comparator 20 becomes logic '0.' For example, if the output level becomes '0' after the subtraction is executed five times:

$$1/2 - \{5 \cdot (1/16)\} = 3/16\ldots(6)$$

Namely, the controlling signal Pw corresponding to 3/16 of the rated largest light amount is given to the power source 22. The extent of energizing the light source 14 is thus determined and white balance adjustment is completed.

The red light source 14R then scans the film 11 on the second adjusting board 12b from its left side E. After reading the red part of the film 11 to the right side F, the red light source 14R is switched off and at the same time, the board not shown in the figures goes in the direction of arrow d (to the right in FIG. 2) back to the base point C, the left side of the first adjusting board 12a. Then, the green light source 14G is switched on. The green light source 14G executes white balance adjustment and scanning of film 11 in the same way as the red light source 14R does. Then, the blue light source 14B is switched on and executes the same action. The reading of the film 11 by the three primary color lights 14R, 14G, and 14B is thus completed.

It is an advantage of the present invention that films of wide range of light transmission factor are read with automatic and adequate white balance adjustment, as an appropriate first adjusting board 12a is chosen corresponding to the light transmission factor of the film to be read and white balance adjustment is made by first irradiating the first adjusting board 12a when reading is made.

In the abovementioned embodiment, the film to be read is a color positive film, but the present invention can also be applied to a negative film.

Further, in the above embodiment, after reading by one color light is completed the board goes back to the base point and as for the next reading by another light, white balance is newly adjusted, but to eliminate the repetition of white balance adjustment regarding the same first adjusting board, white balance adjustment may be done regarding only the first color (for example, red) light.

Instead of the first adjusting board 12a, any control, for example, manual keyboard or switch means may be provided for presenting information of the light transmission factor of the film into the control means.

## Claims

1. Apparatus for reading an image carried on a light transmissive film (11) wherein light from a light source (14) is directed onto the image carrier, the light transmitted through the image-carrier being detected in order to derive a representation of the image, characterised by means (21) for controlling the intensity of the light source in accordance with the determined transmissivity of the image carrier.

2. Apparatus according to claim 1 further comprising means (12a) for providing a representation of the light transmission factor of the image carrier, the control means being responsive to information derived from said representation means.

3. Apparatus according to claim 2 wherein said representation means comprises a selected one of a plurality of interchangeable light transmissive plate members (12a) having different respective light transmission factors, said one being selected to have a light transmission factor corresponding to that of the image carrier (11), said information being derived by comparing the amount of light transmitted through the selected plate member with a reference value.

4. Apparatus according to claim 1 wherein said control means is manually operable.

5. Apparatus according to claim 4 wherein said control means comprises a keyboard or switch means.

6. Apparatus according to any preceding claim wherein said control means is operable to control the intensity of the light source so as to ensure that the amount of light transmitted through the image carrier is adequate to compensate for the light transmission factor of the image carrier.

**Patentansprüche**

1. Vorrichtung zum Lesen eines auf einem lichtdurchlässigen Film (11) vorhandenen Bildes, bei der Licht von einer Lichtquelle (14) auf den Bildträger gerichtet und das durch den Bildträger hindurchtretende Licht zur Erzeugung einer Widergabe des Bildes erfaßt wird, gekennzeichnet durch eine Einrichtung (21) zur Steuerung der Intensität der Lichtquelle in Abhängigkeit von der ermittelten Durchlässigkeit des Bildträgers.

2. Vorrichtung nach Anspruch 1, gekennzeichnet durch eine Einrichtung (12a) zur Erzeugung einer Darstellung des Lichtübertragungsfaktors des Bildträgers, wobei die Steuereinrichtung auf das von der Einrichtung zur Darstellung abgeleitete Informationssignal anspricht.

3. Vorrichtung nach Anspruch 2, dadurch gekennzeichnet, daß die Darstellungseinrichtung ein aus einer Mehrzahl von austauschbaren lichtdurchlässigen Platten (12a) mit jeweils verschiedenen Lichttransmissionsfaktoren ausgewähltes Exemplar aufweist, welches gewählt wird, daß der Lichttransmissionsfaktor dem des Bildträgers (11) entspricht, wobei die entsprechende Information durch Vergleich des Betrages der Lichtransmission durch die ausgewählte Platte mit einem Bezugswert erhalten wird.

4. Vorrichtung nach Anspruch 1, dadurch gekennzeichnet, daß die Steuereinrichtung manuell bedienbar ist.

5. Vorrichtung nach Anspruch 4, dadurch gekennzeichnet, daß die Steuereinrichtung ein Tastenfeld oder Schalteinrichtung aufweist.

6. Vorrichtung nach einem der vorhergehenden Ansprüche, dadurch gekennzeichnet, daß die Steuereinrichtung zur Steuerung der Intensität der Lichtquelle so betreibbar ist, daß der Betrag des durch den Bildträger hindurchtretenden Lichtes zur Kompensation des Lichtübertragungsfaktors des Bildträgers geeignet ist.

**Revendications**

1. Appareil pour lire une image portée par un film apte à laisser passer la lumière (11), dans lequel de la lumière provenant d'une source lumineuse (14) est dirigée sur le support d'image, la lumière transmise à travers le support d'image étant détectée en vue de l'obtention d'une représentation de l'image, caractérisé par des moyens (21) destinés à régler l'intensité de la source lumineuse en fonction du facteur de transmission déterminé du support d'image.

2. Appareil selon la revendication 1, comportant également des moyens (12a) destinés à fournir une représentation du facteur de transmision de la lumière du support d'image, les moyens de réglage étant sensibles à des informations issues desdits moyens de représentation.

3. Appareil selon la revendication 2, dans lequel lesdits moyens de représentation comportent un élément sélectionnée parmi plusieurs éléments en plaque aptes à laisser passer la lumière, interchangeables (12a) qui possèdent chacun des facteurs de transmission de la lumière différents, ledit élément étant sélectionné pour avoir un facteur de transmission de la lumière correspondant à celui du support d'image (11), lesdites informations étant obtenues par une comparaison de la quantité de lumière transmise à travers l'élément en plaque sélectionné avec une valeur de référence.

4. Appareil selon la revendication 1, dans lequel lesdits moyens de réglage peuvent être actionnés manuellement.

5. Appareil selon la revendication 4, dans lequel lesdits moyens de réglage comportent un clavier ou des moyens de commutation.

6. Appareil selon l'une quelconque des revendications précédentes, dans lequel lesdits moyens de réglage sont aptes à opérer pour régler l'intensité de la source lumineuse, afin de faire en sorte que la quantité de lumière transmise à travers le support d'image soit suffisante pour compenser le facteur de transmission de la lumière du support d'image.

FIG. 1

FIG. 2